# EUROPÄISCHE PATENTSCHRIFT

(11) **EP 2 945 807 B1**
(45) Veröffentlichungstag und Bekanntmachung des Hinweises auf die Patenterteilung: **10.01.2018**
(21) Anmeldenummer: 13823923.1
(22) Anmeldetag: 13.11.2013
(51) Int. Cl.: B42D 15/00, B42D 25/00

(54) **DATENBLATT FÜR EIN SICHERHEITS- UND/ODER WERTDOKUMENT**
DATASHEET FOR A SECURITY AND/OR VALUE DOCUMENT
FEUILLE DE DONNÉES POUR DOCUMENT DE SÉCURITÉ ET/OU DE VALEUR

(30) Priorität: 17.01.2013 DE 102013000717
(43) Veröffentlichungstag der Anmeldung: 25.11.2015
(73) Patentinhaber: Bundesdruckerei GmbH, 10958 Berlin (DE); Covestro Deutschland AG, 51373 Leverkusen (DE)
(72) Erfinder: PUDLEINER, Heinz, 47800 Krefeld (DE); TZIOVARAS, Georgios, 42275 Wuppertal (DE); YESILDAG, Cengiz, 51377 Leverkusen (DE); TRÖLENBERG, Stefan, 15749 Mittenwalde (DE); FISCHER, Jörg, 13053 Berlin (DE); PEINZE, Franziska, 12587 Berlin (DE)
(74) Vertreter: Mammel und Maser
(86) Internationale Anmeldenummer: PCT/DE2013/000677
(87) Internationale Veröffentlichungsnummer: WO 2014/111071

(56) Entgegenhaltungen:
- EP-A1- 0 013 021
- WO-A1-2006/079224
- DE-A1- 4 421 561
- DE-A1-102004 055 495
- DE-B3-102008 012 428

## Beschreibung

### Gebiet der Erfindung

Die Erfindung betrifft ein Datenblatt zur Einbindung in ein vorzugsweise buchförmiges Sicherheits- und/oder Wertdokument, wobei das Datenblatt aus zumindest zwei gestapelt angeordneten Lagen aus einem organischen Polymerwerkstoff gebildet ist und wobei zumindest in einem Teilbereich zwischen den Lagen sowie außerhalb der Lagen, eine Lasche bildend, ein Textil angeordnet ist. Die Erfindung betrifft des Weiteren ein Verfahren zur Herstellung eines solchen Datenblattes sowie ein Sicherheits- und/oder Wertdokument umfassend ein solches Datenblatt.

### Hintergrund der Erfindung und Stand der Technik

Erfindungsgemäße Datenblätter sind typischerweise in buchförmigen Dokumenten enthalten. Im Rahmen der Erfindung umfasst der Begriff "Buchform" auch Hefte, die Seiten bzw. Blattzahl kann im Bereich von 1 bis 50, typischerweise von 5 bis 40, liegen. Dabei können diese Dokumente nur ein erfindungsgemäßes Datenblatt oder mehrere solcher Datenblätter enthalten, welche in der Regel (aber nicht zwingend) zwischen zwei Buchdeckeln (hart oder flexibel) angeordnet sind. Zusammen mit dem Datenblatt können auch hiervon verschiedene weitere Datenblätter, beispielsweise auf Basis von Papierwerkstoffen, enthalten sein. Ein solches Dokument ist beispielsweise ein Reisepass, es sind aber auch beliebige andere Dokumente dieses Aufbaus umfasst.

Solche Datenblätter tragen typischerweise Informationen, zumindest teilweise individualisiert und/oder personalisiert. Individualisiert bedeutet auf ein Dokument bezogen, z.B. eine Seriennummer. Personalisiert bedeutet auf den Dokumenteninhaber bezogen, z.B. Namen oder Bild. Des Weiteren können in einem solchen Datenblatt Sicherheitsmerkmale integriert sein. Dafür kommen alle fachüblichen Sicherheitsmerkmale in Frage, welche typischerweise bei Kunststofflaminaten als Datenblatt einsetzbar sind.

Ein solches buchförmiges Dokument mit der Nutzung eines textilen Gewebes als Lasche bzw. Scharnier ist bekannt aus der Literaturstelle WO2006/079224. Ein heftförmiges Dokument mit textiler Kernschicht, aber mit aufwendiger thermoplastischer Kunststoffschicht ist aus der Literaturstelle EP 1812244 (= DE 10 2004 055495 A1) bekannt. Ein Reisepass mit plastifizierter Datenseite und Verwendung eines Vliesstreifens als Knick/Klappkante ist aus der Literaturstelle EP 2116390 bekannt.

Ein Personaldokument in Heftform mit Einband, einer mehrschichtigen Personalisierungsseite, sowie mit Innenseiten, wobei die Personalisierungsseite und die Innenseiten mittels einer Naht im Einband befestigt sind, ist aus der Literaturstelle DE 10 2004 055 495 A1 (= EP 1812244) bekannt. DE 10 2004 055495 A1 offenbart ein Datenblatt zur Einbindung in ein vorzugsweise buchförmiges Sicherheits- und/oder Wertdokument, wobei das Datenblatt aus zumindest zwei gestapelt angeordneten Lagen aus einem organischen Polymerwerkstoff gebildet ist, wobei zumindest in einem Teilbereich zwischen den Lagen sowie außerhalb der Lagen, eine Lasche bildend, ein Textil angeordnet ist, und wobei das Textil zumindest im Bereich zwischen den Lagen zumindest teilweise mit einem Binder ein- oder beidseitig beschichtet und/oder durchtränkt und mit den beiden Lagen mittels des Binders Stoffschlüssig verbunden ist. DE 10 2004 055495 A1 offenbart nicht, dass das Textil aus transparenten Fasern gebildet ist, und offenbart auch nicht, dass die Fasern des Textils im Wesentlichen gradlinig und parallel zueinander ausgerichtet sind und als Streifenlinsen bei der Betrachtung des Datenblattes wirken, wodurch optische Effekte bezüglich eines in oder auf einer Lage angeordneten Druckbildes erzeugbar sind. Beispielsweise aus den Literaturstellen DE 10 2008 012 428 B3, DE 44 21 561 A1 und EP 0688839 A2 sind aus anderen Zusammenhängen Polycarbonate auf Basis eines geminal disubstituierten Dihydroxy-diphenylcycloalkans per se bekannt. In diesem Stand der Technik werden solche Polycarbonate als Bindemittel von Siebdruckfarben eingesetzt. Dieser Literaturstelle sind auch Verfahren zur Herstellung solcher Polycarbonate entnehmbar. Solche Polycarbonate finden mittlerweile auch im Bereich der Sicherheits- und/oder Wertdokumente Anwendung. Nachteilig bei den insofern bekannten Sicherheits- und/oder Wertdokumenten ist eine unzureichende Flexibilität der Lasche des Datenblattes, was ein "Aufsperren" des Buches zur Folge hat. Des Weiteren ist z.B. bei TPU-Laschen eine potentielle Delaminationsmöglichkeit der Passkarte zwischen TPU-Innenlage und PC Außenlagen vorhanden, die nur durch zusätzlichen Aufwand, beispielsweise Beschichtungen oder Materialmodifizierung, vermindert werden kann. Bei Gewebelaschenkonzepten zur Herstellung von Sicherheits- und/oder Wertdokumenten wird typischerweise ein passkarten- bzw- datenblattfremdes Gewebematerlal, z. B. Polyester verwendet. Um eine innige Verbindung von Laschenmaterial und Polymerlagen des Datenblattes zu erreichen, müssen aufwendige Durchbrüche eingebracht werden, wie sie beispielsweise in der Literaturstelle WO 2006079224 beschrieben sind.

### Technisches Problem der Erfindung

Der Erfindung liegt daher das technische Problem zu Grunde, ein Datenblatt anzugeben, welches einerseits eine Lasche mit hoher Flexibilität aufweist und so ein "Aufsperren" des Dokumentes sicher vermeidet, und andererseits eine sichere Verbindung aller Komponenten des Datenblattes, einschließlich der Lasche, miteinander bei einfacher Herstellbarkeit zu gewährleisten.

### Grundzüge der Erfindung und bevorzugte Ausführungsformen

Zur Lösung dieses technischen Problems lehrt die Erfindung ein Datenblatt gemäß Anspruch 1.

Mit einem erfindungsgemäßen Datenblatt wird eine hochflexible Lasche gewährleistet, welche im fertigen Dokument als Scharnierlasche dient und welche zudem besonders sicher mit den Lagen des Datenblattes verbunden ist. Ein erfindungsgemäßes Datenblatt ist auch vergleichsweise einfach herstellbar.

Das organische Polymer der Lagen kann grundsätzlich ein beliebiger im Bereich der Sicherheits-und/oder Wertdokumente verwendeter Polymerwerkstoff sein. Beispiele hierfür sind: transparente, opake oder undurchsichtige Polymerwerkstoffe. Der organische Polymerwerkstoff der Lagen kann beispielsweise ausgewählt sein aus der Gruppe bestehend aus PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid), Polystyrol, Polyacrylate und Methacrylate, Vinylester, ABS und Copolymere solcher Polymere. Besonders bevorzugt ist die Verwendung von PC für die Lagen.

Als Kunststoffe für die Kunststofffolien kommen alle transparenten Thermoplaste in Frage: Polyacrylate, Polymethacrylate (PMMA; Plexiglas® Fa. Röhm), Cycloolefin-Copolymere (COC; Topas® Fa. Ticona; Zenoex® Fa. Nippon Zeon; Apel® Fa. Japan Synthetic Rubber), Polysulfone (Ultrason® Fa. BASF; Udel® Fa. Solvay), Polyester, wie z.B. PET oder PEN, Polycarbonat, Polycarbonat/Polyester-Blends, z.B. PC/CoPET, Polycarbonat/Polycyclohexylmethanolcyclohexandicarboxylat (PCCD; Solix® Fa. Sabic Innovative Plastics), Polycarbonat/PBT (Xylex®).

Bevorzugt im Rahmen der Erfindung handelt es sich bei dem oder den thermoplastischen Kunststoff(en) in den Schichten unabhängig voneinander um Polycarbonate oder Copolycarbonate auf Basis von Diphenolen, Poly- oder Copolyacrylate, Poly- oder Copolymethacrylate, Poly- oder Copolymere mit Styrol, thermoplastische Polyurethane, Polyolefine, Poly- oder Copolykondensate der Terephthalsäure oder Naphthalindicarbonsäure oder Mischungen aus diesen, bevorzugt um Polycarbonate oder Copolycarbonate auf Basis von Diphenolen, Poly- oder Copolyacrylate, Poly- oder Copolymethacrylate, Poly- oder Copolykondensate der Terephthalsäure oder Naphthalindicarbonsäure oder Mischungen aus diesen.

Der organische Binder kann im Kern ein beliebiger Binder sein, welcher mit dem organischen Polymer der Lagen eine feste und dauerhafte Bindung eingeht, insbesondere beim Laminieren. Bevorzugt ist im Falle des Binders, insbesondere bei Verwendung von PC als Werkstoff für die Lagen, ein Polycarbonatderivat, insbesondere auf Basis Bisphenol A, vorzugsweise auf Basis eines geminal disubstituierten Dihydroxydiphenyl-cycloalkans. Im Einzelnen kann der vorzugsweise als Polycarbonatderivat ausgebildete Binder funktionelle Carbonatstruktureinheiten der Formel (I) enthalten, 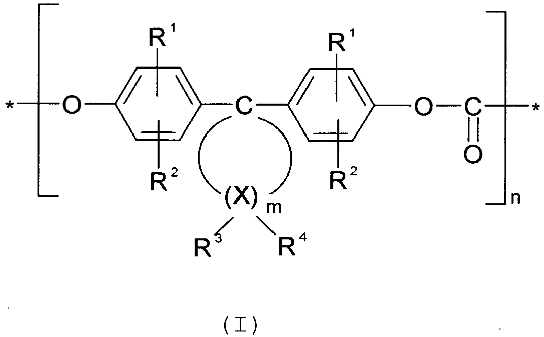 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl; m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Massgabe, dass an mindestens einem Atom X, R³ und R⁴ gleichzeitig Alkyl bedeuten.

Weiterhin bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monmeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein.

Ein erfindungsgemäßer Binder kann beispielsweise gemäss der Literaturstelle DE 38 32 396.6 aus Diphenolen der Formel (Ia) hergestellt werden. Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

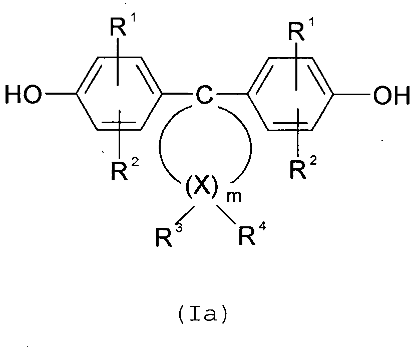

Ausserdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha, alpha '-Bis-(hydroxyphenyl)-diisopropylbenzole sowie deren kernalkylierte und kernhalogenierte Verbindungen.

Diese und weitere geeignete Diphenole sind z.B. in den Literaturstellen US-A 3 028 365, 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben. Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) und ganz besonders zwischen 100 Mol-% (Ia) zu 0 Mol-% (Ib) und 50 Mol-% (Ia) zu 50 Mol-% (Ib) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäss eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden.Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4''-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 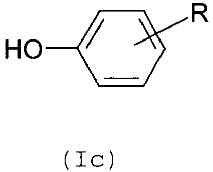 worin
R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dienen beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonatderivate können linear oder verzweigt sein, sie sind Homopolycarbonate oder Copolycarbonate auf Basis der Diphenole der Formel (Ia).

Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-% und ganz besonders von 100 Mol-% bis 50 Mol-%, bezogen auf die Gesamtmenge von 100 Mol-% an Diphenoleinheiten, in Polycarbonatderivaten enthalten.

Eine besonders vorteilhafte Ausführungsform der Erfindung ist dadurch gekennzeichnet, dass das Polycarbonatderivat ein Copolymer enthaltend, insbesondere bestehend aus, Monomereinheiten M1 auf Basis Bisphenol A sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,5, insbesondere größer als 0,8, beispielsweise größer als 1,0 ist.

Ganz besonders bevorzugt ist eine flüssige Zubereitung enthaltend: A) 1 bis 40 Gew.-% eines erfindungsgemäß eingesetzten Polycarbonatderivates, und B) 50 bis 99 Gew.-% eines organischen Lösungsmittels oder Lösungsmittelgemisches.

Die eingesetzten organischen Lösungsmittel sind vorzugsweise halogenfreie Lösungsmittel. In Frage kommen insbesondere aliphatische, cycloaliphatische, aromatische Kohlenwasserstoffe, wie Mesitylen, 1,2,4-Trimethylbenzol, Cumol und Solvent Naptha, Toluol, Xylol; Ester, wie Methylacetat, Ethylacetat, Butylacetat, Methoxypropylacetat, Ethyl-3-ethoxypropionat, Butylglycolacetat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat, Butylglycolacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naptha, Ethyl-3-ethoxypropionat, Methoxypropylacetat und Butylglycolacetat.

Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 20 bis 50 Gew.-%, insbesondere 20 bis 40 Ges.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 20 bis 50 Gew.-%, insbesondere 20 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt. Anstelle von L2 und/oder L4 oder zusätzlich kann das Lösungsmittelgemisch auch L7) mit 10 bis 50 Gew.-%, vorzugsweise 20 bis 50 Gew.-%, insbesondere 20 bis 40 Gew.-%, Butylglykol-Acetat enthalten, wobei die Summe der verwendeten Komponenten L1 bis L7 stets 100 Gew.-% ergibt.

Als organische Lösemittel bei der Zubereitung einer zum Beschichten einer Lage oder des Textils geeigneten Binderlösung kommen neben den vorstehend im Zusammenhang mit dem Binder und dessen Herstellung beschriebenen Lösungsmittel alle im Rahmen beispielsweise der Drucktechnologie, insbesondere der Tintenstrahldrucktechnologie, fachüblichen Lösungsmittel und Lösungsmittelgemische in Frage. Aber auch der Einsatz von wäßrigen Dispersionen, welche weniger als 10 Gew.-% organische Lösemittel enthalten, ist möglich. Dann liegt der Binder mit seinen erfindungsgemäßen Komponenten als dispergierte filmbildende Partikel vor. Die Zubereitung kann, je nach Einsatzgebiet, als Lösung, Dispersion, Emulsion oder Paste vorliegen. Die Einstellung einer geeigneten Viskosität kann der Fachmann nach Maßgabe der einzusetzenden Beschichtungstechnologie unschwer wählen und ausführen. Es können Farbmittel und/oder Dispergieradditive, beispielsweise kommerziell erhältlich von den Firmen Evonik oder Byk, zugegeben sein.

Werden für Lagen und Binder die vorstehend beschriebenen Polycarbonate bzw. Polycarbonatderivate eingesetzt, so wird bei der Herstellung im Wege der Laminierung ein besonders stabiler und gegen Delaminieren gesicherter PC-Blockverbund erhalten.

In einer Weiterbildung der Erfindung ist das Textil im Bereich zwischen den Lagen und oder außerhalb der Lagen teilweise mit einem organischen Binder ein- oder beidseitig beschichtet und/oder durchtränkt, wobei mittels der teilweisen ein- oder beidseitigen Beschichtung und/oder Durchtränkung ein Muster gebildet ist, vorzugsweise durch Applikation des Binders als Druckschicht auf das Textil und/oder auf eine innenliegende Seite einer Lage oder beide innenliegenden Seiten beider Lagen. Man erhält hierdurch beispielsweise bei transparenten oder opaken Lagen und Textil letztendlich eine Art "Wasserzeichen", also ein in der Durchsicht erkennbares Muster, welches insofern als Sicherheitsmerkmal dient. Im Rahmen dieser Ausführungsform können in dem Binder auch Lumineszenzstoffe und/oder - partikel vorgesehen sein, welche beispielsweise bei UV-Anregung Licht im Sichtbaren emittieren. Hierfür kommen alle fachüblichen Lumineszenzstoffe bzw. -partikel in Frage. Wenn dann das Datenblatt mit UV beispielsweise hinterleuchtet wird, wird das "Wasserzeichen" sichtbar. Insofern braucht dann das Muster an sich nicht bei Beleuchtung bzw. Durchleuchtung mit sichtbarem Licht erkannbar zu sein.

Grundsätzlich kann der Binder zusätzlich eine oder mehrere Substanzen oder Materialien aus der Gruppe bestehend aus Farbpigmente, Effektpigmente, optisch variable Pigmente, und Lumineszenzpigmente enthalten.

In einer weiteren Ausführungsform der Erfindung ist auf dem Gewebe bzw. zwischen Gewebe und einer Lage, in den Binder eingebettet, zumindest ein elektronischer Schaltkreis mit daran angeschlossener Antenne angeordnet.

Ein Textil kann grundsätzlich ein Gewebe, Gewirke, Gestrick, Geflecht, Nähgewirke, Vliesstoff, Filz, flächiges Faselbündel, Fasernetzwerk oder flächige Faseranordnung sein. Als Materialien kommen beispielsweise Polyester, Polyamid, Baumwoll- oder Glasfasern in Frage.

Erfindungsgemäß ist das Textil aus transparenten Fasern gebildet und die Fasern des Textils parallel sind zueinander ausgebildet und wirken als Streifenlinsen bei der Betrachtung des Datenblattes, wodurch optische Effekte bezüglich eines in oder auf einer Lage angeordneten Druckbildes erzeugbar sind. Solche optischen Effekte umfassen Kippeffekte aus verschiedenen Winkeln, 3D-Effekte, Moire-Effekte bzw. Vergrößerungen oder Bewegungseffekte umfassen.

Die Erfindung umfasst auch ein Verfahren nach Anspruch 8.

Als Drucktechniken zur Applikation des Binders bzw. einer Zubereitung enthaltend den Binder kommen alle im Bereich der Sicherheits- und/oder Wertdokumente üblichen Techniken, wie Siebdruck, Flexodruck, Offsetdruck, Hochdruck, Tiefdruck, Lettersetdruck, Thermosublimationsdruck, oder Tintenstrahldruck in Frage. Alternativ ist natürlich auch das Aufstreichen, -Rakeln, - Rollen, Stempeln, Gießverfahren, wie Filmgiessen, Lackierverfahren, Tauchen, Walzen- oder Rasterauftragsverfahren, Schleudern, Kalandrieren usw. möglich.

Die Erfindung betrifft schließlich ein Sicherheits und/oder Wertdokument nach Anspruch 11.

Im Folgenden wird die Erfindung anhand von nicht limitierenden Ausführungsbeispielen näher erläutert. Es zeigen
- Figur 1:: ein Datenblatt mit "Wasserzeichen",
- Figur 2:: ein Datenblatt mit polymerhaltiger Lasche,
- Figur 3:: ein Datenblatt mit elektronischem Schaltkreis und Antenne,
- Figur 4:: ein Datenblatt mit Textil in nur einem Teilbereich,
- Figur 5:: ein erfindungsgemäßes Datenblatt mit transparenten und als Streifenlinsen angeordneten Textilfasern,
- Beispiel 1:: Herstellung von einsetzbaren Polycarbonatderivaten
- Beispiel 1.1:: Herstellung eines ersten Polycarbonatderivats

183,3 g (0,80 Mol) Bisphenol A (2,2-Bis-(4-hydroxyphenyl)-propan, 61,1 g (0,20 Mol) 1,1-Bis-(4-hydroxyphenyl)-3,3,5-trimethylcyclohexan, 336,6 g (6 Mol KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigte eine relative Lösungsviskosität von 1,255.

### Beispiel 1.2: Herstellung eines zweiten Polycarbonatderivats

Analog dem Beispiel 1.1 wurde eine Mischung aus 127,1 g (0,56 Mol) Bisphenol A und 137,7 g (0,44 Mol) 1,1-Bis-(4-hydroxyphenyl)-3,3,5-trimethylcyclohexan zum Polycarbonat umgesetzt.

Das Polycarbonatderivat zeigte eine relative Lösungsviskosität von 1,263.

### Beispiel 1.3: Herstellung eines dritten Polycarbonatderivats

Wie in Beispiel 1 wurde eine Mischung aus 149,0 g (0,65 Mol) Bisphenol A und 107,9 g (0,35 Mol) 1,1-Bis-(4-hydroxyphenyl)-3,3,5-trimethylcyclohexan zum Polycarbonat umgesetzt.

Das Polycarbonatderivat zeigte eine relative Lösungsviskosität von 1,263.

### Beispiel 2.1: Herstellung einer ersten erfindungsgemäß eingesetzten flüssigen Zubereitung

Als drucktechnisch aufbringbare flüssige Zubereitung wird die folgende Lösung hergestellt: 17,5 Gew.-Teile des Polycarbonats aus Beispiel 1.3, 82,5 Gew.-Teile des folgenden Lösungsmittel-Gemisches, bestehend aus:

| | |
|---|---|
| Mesitylen | 2,4 |
| 1-Methoxy-2-propanolacetat | 34, 95 |
| 1,2,4-Trimethylbenzol | 10,75 |
| Ethyl-3-ethoxypropionat | 33,35 |
| Cumol | 0,105 |
| Solvent Naphtha | 18,45 |

Es wurde eine farblose, hochviskose Lösung mit einer Lösungsviskosität bei 20°C von 800m Pas erhalten.

Zu 92 Gew.-% dieser Lösung werden 8 Gew.-% einer handelsüblichen Lösung einer Luminszenzsubstanz (Floureszenz im Sichtbaren auf UV-Anregung) in Toluol (1,5 Gew.-% in Toluol) zugesetzt. Die Mischung wird homogenisiert und ist damit verwendungsfähig.

Alternativ zu der vorstehenden Lösung des Polymers kann auch eine entsprechende Menge der Lösung APEC PUD 6581-9 (BayerMaterialScience) eingesetzt werden.

### Beispiel 2.2: Herstellung einer zweiten erfindungsgemäß eingesetzten flüssigen Zubereitung

Die Zubereitung wird analog dem Beispiel 2.1 hergestellt, nur dass als Lumineszenzsubstanz 8 Gew.-% CD740 der Firma Honeywell eingesetzt werden.

### Beispiel 2.3: Herstellung einer dritten erfindungsgemäß eingesetzten flüssigen Zubereitung

Die Zubereitung wird analog dem Beispiel 2.1 hergestellt, nur dass als Lumineszenzsubstanz 8 Gew.-% CD702 der Firma Honeywell eingesetzt werden.

### Beispiel 2.4: Herstellung einer vierten erfindungsgemäß eingesetzten flüssigen Zubereitung

Die Herstellung erfolgt analog Beispiel 2.1, wobei jedoch die Lumineszenzsubstanz weggelassen wird.

### Beispiel 3: Herstellung verschiedener Ausführungsformen eines Datenblattes

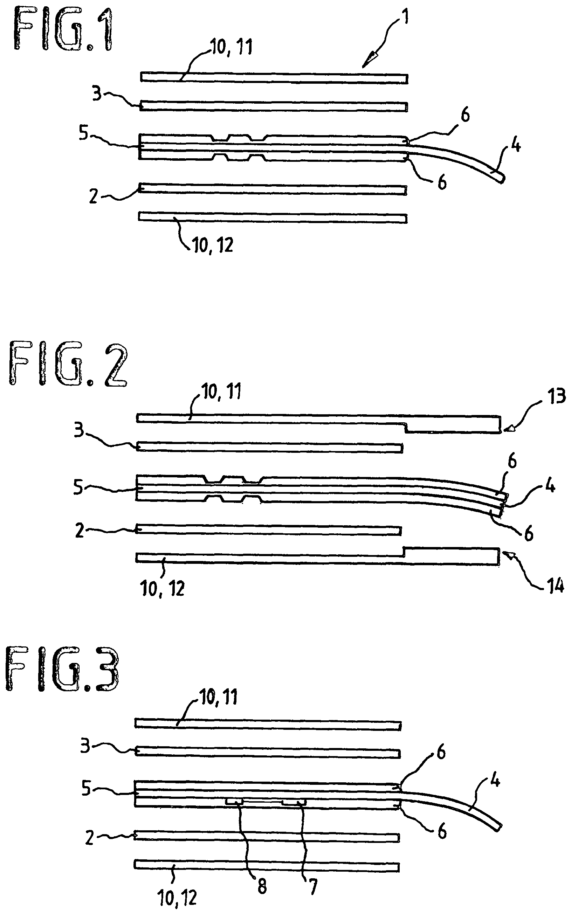

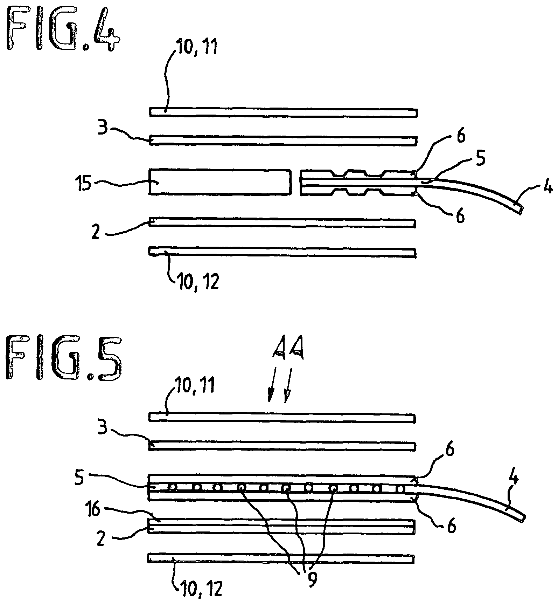

In der Figur 1, ebenso, wie in den weiteren Figuren, ist ein Datenblatt 1 bzw. sind dessen Komponenten vor dem Laminieren dargestellt. Man erkennt in den Figuren zunächst zwei Lagen 2, 3 aus einem organischen Polymerwerkstoff, vorzugsweise aus transparentem PC. Die Lagen können aus mehreren Folien gebildet sein. Des Weiteren können auf oder in einer Lage 2, 3 oder beiden Lagen 2, 3 Druckschichten 16 und/oder Sicherheitsmerkmale eingerichtet sein, welche der Übersichtlichkeit halber nicht dargestellt sind, außer in der Figur 5. Insofern kann eine Lage auch nur in Teilbereichen transparent sein. Grundsätzlich können die Lagen aber auch insgesamt intransparent sein. Man erkennt weiterhin ein Textil 5, gebildet aus Fasern 9, beispielsweise aus Glasfasern oder Polyamidfasern. Schließlich ist ein Binder 6 erkennbar, welcher auf das Textil 5 aufgebracht ist und dieses durchtränken kann (aber nicht muss). Der Binder 6 kann mittels einer Drucktechnologie auf das Textil 5 aufgebracht sein, durch einseitiges oder zweiseitiges Bedrucken, oder durch jede andere fachübliche Beschichtungstechnologie. Schließlich erkennt man, dass außerhalb der Lagen 2, 3 das Textil 5 hervorsteht, wodurch eine Lasche 4 gebildet ist. Das fertige Datenblatt 1 entsteht durch Laminieren der dargestellten Komponenten in der dargestellten Anordung bzw. Stapelung derselben. Dabei kann der Binder 6 vor dem Laminieren getrocknet sein, dies ist aber nicht zwingend notwendig.

In dem Ausführungsbeispiel der Figur 1 weist der Binder 6 Bereiche unterschiedlicher Druckdichte auf, nach Maßgabe eines dem Druckvorgang zu Grunde gelegten Musters. Wird nun der dargestellte Verbund der Komponenten (mit getrocknetem Binder 6) mittels einer Laminierungsvorrichtung 10 laminiert, so werden Binder 6 und beide Lagen 2, 3 stoffschlüssig miteinander verbunden, wobei dann die Bereiche unterschiedlicher Druckdichten des Binders 6 in dem fertigen Datenblatt 1 als "Wasserzeichen"-Muster im Durchlicht erkennbar sind. In diesem Ausführungsbeispiel kann die Laminierungsvorrichtung 10 aus zwei ebenen Laminierblechen 11, 12 gebildet sein. Diese werden in fachüblicher Weise in einer Heiz-/Kühlpressen-Kombination unter Druck beheizt und abgekühlt.

Während in dem Ausführungsbeispiel der Figur 1 die Lasche 4 nicht mit Binder versehen ist, ist in dem Ausführungsbeispiel der Figur 2 ebenfalls mit Binder 6 versehen bzw. bedruckt. Für das Laminieren empfiehlt es sich dann, dass die Laminierbleche einander zugewandte Stufen 13, 14 aufweisen, welche einen Höhenausgleich im Bereich der Lasche 4 bewirken. Bei dieser Ausführungsform ist vorteilhaft, dass ein "Ausfransen" im Bereich der Lasche vermieden werden kann.

In dem Ausführungsbeispiel der Figur 3 sind auf dem Textil 5 und eingebettet in den Binder 6 ein elektronischer Schaltkreis 7, beispielsweise ein Transponder, und eine damit elektrisch verbundene Antenne 8 eingerichtet. Diese Komponenten werden im Zuge des Laminierens in das Datenblatt 1 integriert. Ansonsten entspricht diese Ausführungsform jener der Figur 1.

Während in den bisher beschriebenen Ausführungsformen das Textil 5 das gesamte Datenblatt 1 durchspannte, zeigt die Figur 4 eine Ausführungsform, in welcher das Textil 5 in nur einem Teilbereich zwischen den Lagen 2, 3 angeordnet ist. In den textilfreien Bereichen zwischen den Lagen 2, 3 kann, muss aber nicht, dann eine Polymerfolie 15, vorzugsweise aus PC, und mit der Dicke des Textils 5 eingelegt sein. So wird, beim fertig laminierten Datenblatt 1 eine einheitliche Dicke gewährleistet.

Die Figur 5 schließlich zeigt eine Ausführungsform der Erfindung mit einem Textil 5, wobei die Fasern 9 transparent und parallel zueinander, eine Streifenlinse bildend, angeordnet sind. Das auf der Lage 2 angeordnete und unter dem Textil liegende Druckbild 16 unterliegt dann für einen Betrachter optischen Effekten.

## Patentansprüche

1. Datenblatt (1) zur Einbindung in ein vorzugsweise buchförmiges Sicherheits- und/oder Wertdokument,
wobei das Datenblatt (1) aus zumindest zwei gestapelt angeordneten Lagen (2, 3) aus einem organischen Polymerwerkstoff gebildet ist,
wobei zumindest in einem Teilbereich zwischen den Lagen (2, 3) sowie außerhalb der Lagen (2, 3), eine Lasche (4) bildend, ein Textil (5) angeordnet ist,
wobei das Textil (5) zumindest im Bereich zwischen den Lagen (2, 3) zumindest teilweise mit einem organischen Binder (6) ein- oder beidseitig beschichtet und/oder durchtränkt und mit den beiden Lagen (2, 3) mittels des Binders (6) stoffschlüssig verbunden ist,
wobei das Textil (5) aus transparenten oder opaken Fasern (9) gebildet ist und
wobei die Fasern (9) des Textils (5) im Wesentlichen gradlinig und parallel zueinander ausgerichtet sind und als Streifenlinsen bei der Betrachtung des Datenblattes (1) wirken, wodurch optische Effekte bezüglich eines in oder auf einer Lage (2, 3) angeordneten Druckbildes erzeugbar sind.

2. Datenblatt (1) nach Anspruch 1, wobei der organische Polymerwerkstoff ausgewählt ist aus der Gruppe bestehend aus PC, wobei PC als Abkürzung für Polycarbonat, insbesondere Bisphenol A Polycarbonat, steht, PET, wobei PET als Abkürzung für Polyethylenglykolterephthalat steht, PMMA, wobei PMMA als Abkürzung für Polymethylmethacrylat steht, TPU, wobei TPU als Abkürzung für Thermoplastische Polyurethan Elastomere steht, PE, wobei PE als Abkürzung für Polyethylen steht, PP, wobei PP als Abkürzung für Polypropylen steht, PI, wobei PI als Abkürzung für Polyimid oder Poly-trans- Isopren steht, PVC, wobei PVC als Abkürzung für Polyvinylchlorid steht, Polystyrol, Polyacrylate und Methacrylate, Vinylester, ABS und Copolymere solcher Polymere, Cycloolefin-Copolymere, Polysulfone, Polyester, PET, PEN, Polycarbonat/ Polyester-Blends , z.B. PC/CoPET, Polycarbonat/ Polycyclohexylmethanol- cyclohexandicarboxylat , insbesondere Polycarbonate oder Copolycarbonate auf Basis von Diphenolen, Poly- oder Copolyacrylate, Poly- oder Copolymethacrylate, Poly- oder Copolymere mit Styrol, thermoplastische Polyurethane, Polyolefine, Poly- oder Copolykondensate der Terephthalsäure oder Naphthalindicarbonsäure oder Mischungen aus diesen, besonders bevorzugt Polycarbonate oder Copolycarbonate auf Basis von Diphenolen, Poly- oder Copolyacrylate, Poly- oder Copolymethacrylate, Poly- oder Copolykondensate der Terephthalsäure oder Naphthalindicarbonsäure oder Mischungen aus diesen.

3. Datenblatt (1) nach Anspruch 1 oder 2, wobei der organische Binder (6) ein Polycarbonatderivat ist, insbesondere auf Basis Bisphenol A, vorzugsweise auf Basis eines geminal disubstituierten Dihydroxydiphenyl-cycloalkans.

4. Datenblatt (1) nach einem der Ansprüche 1 bis 3, wobei das Textil (5) im Bereich zwischen den Lagen (2, 3) und oder außerhalb der Lagen (2, 3) teilweise mit dem organischen Binder (6) ein- oder beidseitig beschichtet und/oder durchtränkt ist, wobei mittels der teilweisen ein- oder beidseitigen Beschichtung und/oder Durchtränkung ein Muster gebildet ist, vorzugsweise durch Applikation des Binders (6) als Druckschicht auf das Textil und/oder auf eine innenliegende Seite einer Lage (2, 3) oder beide innenliegenden Seiten beider Lagen (2, 3).

5. Datenblatt (1) nach einem der Ansprüche 1 bis 4, wobei der Binder (6) zusätzlich eine oder mehrere Substanzen oder Materialien aus der Gruppe bestehend aus Farbpigmente, Effektpigmente, optisch variable Pigmente, und Lumineszenzsubstanzen oder -pigmente enthält.

6. Datenblatt (1) nach einem der Ansprüche 1 bis 5, wobei in oder auf dem Textil (5) zumindest ein elektronischer Schaltkreis (7) mit daran angeschlossener Antenne (8) angeordnet ist.

7. Datenblatt (1) nach einem der Ansprüche 1 bis 6, wobei zumindest eine Lage (2, 3), vorzugsweise beide Lagen (2, 3), transparent oder opak sind.

8. Verfahren zur Herstellung eines Datenblattes (1) nach einem der Ansprüche 1 bis 7,
wobei zwei Lagen (2, 3) aus einem organischen Polymerwerkstoff und ein Textil (5) aus transparenten oder opaken Fasern (9) bereit gestellt werden,
wobei auf zumindest Teilbereiche einer Seite einer Lage (2, 3) oder beider Lagen (2, 3) und/oder auf Teilbereiche einer Seite oder beider Seiten des Textils (5) eine Beschichtung aus einem flüssigen ungehärteten Binder (6) aufgetragen, insbesondere aufgedruckt, wird,
wobei die Lagen (2, 3) und das Textil (5) gestapelt zueinander und mit zueinander gewandten beschichteten Seiten angeordnet werden mit der Maßgabe, dass ein Teil des Textils (5) als Lasche (4) außerhalb der beiden Lagen (2, 3) hervorsteht,
wobei dann die Lagen (2, 3) und das Textil (5) miteinander laminiert werden, und
wobei der Binder (6) gehärtet bzw. vernetzt wird.

9. Verfahren nach Anspruch 8, wobei die Lasche (4) mit Binder (6) versehen ist oder keinen Binder (6) aufweist.

10. Verfahren nach einem der Ansprüche 8 oder 9, wobei das Textil (5) nur in einem Teilbereich zwischen den Lagen (2, 3) angeordnet wird.

11. Sicherheits-und/oder Wertdokument enthaltend ein Datenblatt (1) nach einem der Ansprüche 1 bis 7, wobei das Datenblatt (1) mittels der Lasche (4) in einem Buchrücken eingebunden, insbesondere eingenäht oder eingeklebt ist.

## Claims

1. A data sheet (1) for integration in a security and/or valuable document, preferably in book-format,
wherein the data sheet (1) is comprised of at least two stacked layers (2, 3) of an organic polymeric material,
wherein at least in a partial section between the layers (2, 3) and outside the layers (2, 3), a textile (5) forming a flap (4) is disposed,
wherein the textile (5) is coated on one or both sides and/or saturated at least in the region between the layers (2, 3) and at least partially with an organic binding agent (6) and is bonded with the two layers (2, 3) by way of the binding agent (6)
wherein the textile (5) is formed from transparent or opaque fibers (9), and
wherein the fibers (9) of the textile (5) are substantially straight-lined and parallel to each other and act as strip lenses when viewing the data sheet (1), whereby optical effects with regard to a printed image disposed in or on a layer (2, 3) is produced.

2. The data sheet (1) according to claim 1, wherein the organic polymeric material is selected from the group consisting of PC, wherein the abbreviation PC denotes polycarbonate, in particular bisphenol A polycarbonate, PET, wherein the abbreviation PET denotes polyethylene terephthalate, PMMA, wherein the abbreviation PMMA denotes poly(methyl methacrylates), TPU, wherein the abbreviation TPU denotes thermoplastic polyurethane elastomers, PE, wherein the abbreviation PE denotes polyethylene, PP, wherein the abbreviation PP denotes polypropylene, PI, wherein the abbreviation PI denotes polyimide or poly-trans-isoprene, PVC, wherein the abbreviation PVC denotes polyvinyl chloride, polystyrene, polyacrylates and methacrylates, vinyl esters, ABS and copolymers of such polymers, cycloolefin copolymers, polysulfones, polyesters, PET, PEN, polycarbonate/polyester blends, e.g., PC/CoPET, polycarbonate/polycyclohexyl methanol cyclohexane dicarboxylate, in particular polycarbonates or copolycarbonates based on diphenols, poly- or copolyacrylates, poly- or copolymethacrylates, poly- or copolymers with styrene, thermoplastic polyurethane, polyolefin, poly- or copolycondensates of the terephthalic acid or naphthalene dicarboxylic acid or mixtures thereof, particularly preferred polycarbonates or copolycarbonates based on diphenols, poly- or copolyacrylates, poly- or copolymethacrylates, poly- or copolycondensates of the terephthalic acid or naphthalene dicarboxylic acid or mixtures thereof.

3. The data sheet (1) according to claim 1 or 2, wherein the organic binding agent (6) is a polycarbonate derivative in particular based on bisphenol A, preferably based on a geminally disubstituted dihydroxy-diphenyl cycloalkane.

4. The data sheet (1) according to one of the claims 1 to 3, wherein the textile (5) in the region between the layers (2, 3) and or outside the layers (2, 3) is partially coated on one or both sides and/or saturated with the organic binding agent (6), wherein by way of the partial coating on one or both sides and/or saturating a pattern is formed, preferably by application of the binding agent (6) as a printing layer on the textile and/or on an inner side of a layer (2, 3) or both inner sides of both layers (2, 3).

5. The data sheet (1) according to one of the claims 1 to 4, wherein the binding agent (6) additionally includes one or a plurality of substances or materials from the group consisting of color pigments, effect pigments, optically variable pigments, and luminescent substances or pigments.

6. The data sheet (1) according to one of the claims 1 to 5, wherein in or on the textile (5) at least one electronic circuit (7) with an antenna (8) connected thereto is disposed.

7. The data sheet (1) according to one of the claims 1 to 6, wherein at least one layer (2, 3), preferably both layers (2, 3), are transparent or opaque.

8. A method for preparing a data sheet (1) according to one of the claims 1 to 7,
wherein two layers (2, 3) of an organic polymeric material and a textile (5) formed from transparent or opaque fibers (9) are provided,
wherein on at least partial sections of one side of a layer (2, 3) or of both layers (2, 3) and/or on partial sections of one side or of both sides of the textile (5) a coating of a liquid uncured binding agent (6) is applied, in particular printed,
wherein the layers (2, 3) and the textile (5) are stacked on each other and are disposed with the coated sides facing each other with the proviso that a part of the textile (5) projects as a flap (4) outside the two layers (2, 3),
wherein then the layers (2, 3) and the textile (5) are laminated to each other, and
wherein the binding agent (6) is cured or crosslinked.

9. The method according to claim 8, wherein the flap (4) is provided with the binding agent (6) or does not include the binding agent (6).

10. The method according to one of the claims 8 or 9, wherein the textile (5) is disposed in a partial section only between the layers (2, 3).

11. A security and/or valuable document comprising a data sheet (1) according to one of the claims 1 to 7, wherein the data sheet (1) is embedded, in particular sewn or glued, in a binding back by means of the flap (4).

## Revendications

1. Feuille de données (1) destinée à être intégrée dans un document de sécurité et/ou de valeur de préférence en forme de livret,
dans laquelle ladite feuille de données (1) est formée d'au moins deux couches (2, 3) superposées, constituées d'un matériau polymère organique,
dans laquelle un textile (5) est disposé au moins dans une partie située entre les couches (2, 3) ainsi qu'à l'extérieur desdites couches (2, 3) de manière à former une patte (4),
dans laquelle le textile (5) est revêtu d'un seul ou des deux côtés et/ou imprégné au moins partiellement par un liant organique (6), au moins dans la partie située entre les couches (2, 3) et est assemblé aux deux couches (2, 3) par conjugaison de matières au moyen dudit liant (6), dans laquelle le textile (5) est formé de fibres (9) transparentes ou opaques et
dans laquelle les fibres (9) du textile (5) sont orientées essentiellement de manière linéaire et parallèle entre elles et agissent comme des lentilles en forme de bande lorsque l'on regarde la feuille de données (1), ce qui permet de créer des effets optiques relatifs à une image imprimée, disposée dans ou sur une couche (2, 3).

2. Feuille de données (1) selon la revendication 1, dans laquelle le matériau polymère organique est choisi parmi le groupe comprenant le PC, PC étant utilisé comme abréviation pour polycarbonate, en particulier bisphénol A polycarbonate, le PET, PET étant utilisé comme abréviation pour polytéréphtalate d'éthylèneglycol, le PMMA, PMMA étant utilisé comme abréviation pour polyméthacrylate de méthyle, le TPU, TPU étant utilisé comme abréviation pour des élastomères de polyuréthane thermoplastiques, le PE, PE étant utilisé comme abréviation pour polyéthylène, le PP, PP étant utilisé comme abréviation pour polypropylène, le PI, PI étant utilisé comme abréviation pour polyimide ou poly-trans-isoprène, le PVC, PVC étant utilisé comme abréviation pour chlorure de polyvinyle, le polystyrène, les polyacrylates et méthacrylates, l'ester de vinyle, l'ABS et les copolymères de cesdits polymères, les copolymères de cyclooléfine, des polysulfones, le polyester, le PET, le PEN, les mélanges de polycarbonate/polyester, par ex. le PC/CoPET, le polycarbonate/polycyclohexylméthanol-cyclohexanedicarboxylate, en particulier des polycarbonates ou des copolycarbonates à base de diphénols, de poly- ou de copolyacrylates, de poly- ou de copolyméthacrylates, de poly- ou de copolymères avec du styrène, des polyuréthanes thermoplastiques, des polyoléfines, des poly- ou copolycondensats de l'acide téréphtalique ou de l'acide naphtalènedicarboxylique ou de mélanges de ceux-ci, de manière privilégiée des polycarbonates ou des copolycarbonates à base de diphénols, de poly- ou de copolyacrylates, de poly- ou de copolyméthacrylates, de poly- ou de copolycondensats de l'acide téréphtalique ou de l'acide naphtalènedicarboxylique ou de mélanges de ceux-ci.

3. Feuille de données (1) selon la revendication 1 ou 2, dans laquelle le liant organique (6) est un dérivé de polycarbonate, en particulier à base de bisphénol A, de préférence à base d'un dihydroxy-diphényle-cycloalcane disubstitué de manière géminée.

4. Feuille de données (1) selon l'une quelconque des revendications 1 à 3, dans laquelle le textile (5) est revêtu d'un seul ou des deux côtés et/ou imprégné au moins partiellement par le liant organique (6), d'un seul ou des deux côtés, dans la partie située entre les couches (2, 3) et/ou à l'extérieur desdites couches (2, 3), un motif étant formé au moyen du revêtement partiel effectué d'un seul ou des deux côtés et/ou de l'imprégnation, de préférence par application dudit liant (6) en tant que couche d'impression sur le textile et/ou sur une face intérieure d'une couche (2, 3) ou sur les deux faces intérieures des deux couches (2, 3).

5. Feuille de données (1) selon l'une quelconque des revendications 1 à 4, dans laquelle le liant (6) contient en outre une ou plusieurs substances ou matériaux choisis parmi le groupe comprenant des pigments colorés, des pigments à effet, des pigments optiquement variables et des substances luminescentes ou pigments luminescents.

6. Feuille de données (1) selon l'une quelconque des revendications 1 à 5, dans laquelle dans ou sur le textile (5) est disposé au moins un circuit électronique (7) pourvu d'une antenne (8) raccordée à ce dernier.

7. Feuille de données (1) selon l'une quelconque des revendications 1 à 6, dans laquelle au moins une couche (2, 3), de préférence les deux couches (2, 3), sont transparentes ou opaques,

8. Procédé destiné à la fabrication d'une feuille de données (1) selon l'une quelconque des revendications 1 à 7,
lors duquel sont fournies deux couches (2, 3) constituées d'un matériau polymère organique et un textile (5) en fibres (9) transparentes ou opaques,
lors duquel sur au moins des parties d'une face d'une seule couche (2, 3) ou des deux couches (2, 3) et/ou sur des parties d'une seule face ou des deux faces du textile (5) est appliqué, en particulier imprimé, un revêtement constitué d'un liant (6) liquide, non durci,
lors duquel les couches (2, 3) et le textile (5) sont superposés les uns aux autres et sont disposés de manière à présenter les uns aux autres leurs faces revêtues, et ce de telle sorte qu'une partie du textile (5) fasse, en tant que patte (4), saillie vers l'extérieur par rapport aux deux couches (2, 3),
puis lors duquel les couches (2, 3) et le textile (5) sont laminés de manière à les rendre solidaires, et
lors duquel le liant (6) est durci ou réticulé.

9. Procédé selon la revendication 8, lors duquel la patte (4) est pourvue du liant (6) ou ne présente pas de liant (6).

10. Procédé selon l'une des revendications 8 ou 9, lors duquel le textile (5) est disposé uniquement dans une partie située entre les couches (2, 3).

11. Document de sécurité et/ou de valeur renfermant une page de données (1) selon l'une quelconque des revendications 1 à 7, dans lequel la page de données (1) est intégrée, en particulier cousue ou collée, dans un dos de livret au moyen de la patte (4).
